(19) Europäisches Patentamt
European Patent Office
Office européen des brevets

(11) **EP 2 735 848 B1**

(12) **EUROPÄISCHE PATENTSCHRIFT**

(45) Veröffentlichungstag und Bekanntmachung des Hinweises auf die Patenterteilung:
**15.08.2018 Patentblatt 2018/33**

(51) Int Cl.:
**G01D 5/347** *(2006.01)*       *G01D 5/26 (2006.01)*
**G01D 5/32** *(2006.01)*

(21) Anmeldenummer: **13182830.3**

(22) Anmeldetag: **03.09.2013**

(54) **Optische Positionsmesseinrichtung**

Optical positioning device

Dispositif optique de mesure de la position

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.11.2012 DE 102012221566**

(43) Veröffentlichungstag der Anmeldung:
**28.05.2014 Patentblatt 2014/22**

(73) Patentinhaber: **Dr. Johannes Heidenhain GmbH 83301 Traunreut (DE)**

(72) Erfinder:
• **Himmel, Mario**
  **07747 Jena (DE)**
• **Wätzig, Jarno**
  **07616 Bürgel (DE)**
• **Jünemann, Thomas**
  **99089 Erfurt (DE)**

(56) Entgegenhaltungen:
**EP-A2- 2 395 328     WO-A1-91/04460
US-A- 5 886 519     US-B1- 7 608 813**

**Beschreibung**

Die Erfindung betrifft eine optische Positionsmesseinrichtung mit einer Maßverkörperung und einer relativ dazu in einer Messrichtung verschiebbaren Abtasteinheit. Diese Positionsmesseinrichtung kann ausgebildet sein zum Messen von linearen Bewegungen oder von rotatorischen Bewegungen.

Bewährt haben sich inkrementale Positionsmesseinrichtungen, bei denen die Maßverkörperung ein erstes Gitter in Form einer periodischen inkrementalen Teilung aufweist und die Abtasteinheit zumindest ein zweites Gitter aufweist, welches zum Gitter der Maßverkörperung in einem vorgegebenen Abtastabstand angeordnet ist. Zur Positionsmessung werden die beiden Gitter mit Licht einer bestimmten Wellenlänge beaufschlagt und mittels einer ersten Detektoranordnung daraus ein positionsabhängiges elektrisches Abtastsignal gewonnen.

Eine derartige Positionsmesseinrichtung, von der unsere Erfindung ausgeht, ist beispielsweise in der DE 33 34 398 C1 und der EP 2 395 328 A2 beschrieben. Dabei ist die inkrementale Positionsmessung ergänzt durch eine absolute Positionsmessung. Die Maßverkörperung enthält zusätzlich zum ersten Gitter eine Absolutmarkierung, aus der mittels einer zweiten Detektoranordnung ein zweites elektrisches Abtastsignal erzeugt wird, welches eine absolute Position innerhalb eines Messbereiches eindeutig definiert.

Der Abtastabstand des ersten und des zweiten Gitters ist derart gewählt, dass ein möglichst hoher Modulationsgrad und somit eine hohe Signalamplitude erzielt wird. Optimale Abtastabstände für die inkrementale Positionsmessung liegen in den sogenannten Talbot-Ebenen. In den Talbot-Ebenen erfolgt eine sich wiederholende Selbstabbildung des ersten Gitters, so dass in diesen Talbot-Ebenen eine periodische Intensitätsverteilung erzeugt wird. Bei dem sogenannten Zweigittergeber gemäß der DE 33 34 398 C1 entstehen die Bilder des mittels einer ebenen Wellenfront beleuchteten ersten Gitters in Talbot-Ebenen mit folgenden Abständen $L_n$ zum ersten Gitter:

$$L_n = n \times T1^2 / \lambda$$

  n: ganze Zahl 0, 1, 2,...
  T1: Gitterkonstante des ersten Gitters
  $\lambda$: Wellenlänge des Lichtes

Es ist ersichtlich, dass die Lage dieser Talbot-Ebenen und somit die optimalen Abtastabstände einerseits von der Gitterkonstante des ersten Gitters und andererseits von der Wellenlänge des verwendeten Lichtes abhängig ist.

Bei der DE 33 34 398 C1 wurde bereits erkannt, dass für die Praxis relativ große Abtastabstände für die Inkrementalabtastung vorteilhaft sind, diese großen Abtastabstände sich aber nachteilig für die Abtastung der Absolutmarkierung auswirken. Als Lösung dieses Problems wird gemäß der DE 33 34 398 C1 vorgeschlagen für die beiden Abtastungen unterschiedliche Abtastabstände vorzusehen, nämlich für die Inkrementalabtastung einen größeren Abtastabstand vorzusehen als für die Abtastung der Absolutmarkierung.

Um bei dieser Anordnung die erforderlichen Abtastabstände einhalten zu können, werden aufwendige Führungen vorgeschlagen.

Aufgabe der Erfindung ist es, eine optische Positionsmesseinrichtung zu schaffen, mit der bei der inkrementalen Positionsmessung sowie auch bei der absoluten Positionsmessung ein möglichst hoher Modulationsgrad erzielt wird. Dabei soll die Positionsmesseinrichtung möglichst kompakt aufgebaut sein und tolerant gegenüber Veränderungen des Abtastabstandes sein.

Gelöst wird diese Aufgabe dadurch, dass zur inkrementalen Positionsmessung Licht einer ersten Wellenlänge und zur absoluten Positionsmessung Licht einer zweiten Wellenlänge verwendet wird, wobei die erste Wellenlänge kleiner ist als die zweite Wellenlänge.

Die oben angegebene Abhängigkeit des Abtastabstandes von der Wellenlänge des verwendeten Lichtes wird bei unserer Erfindung in besonders vorteilhafter Weise ausgenutzt. Es wird für die inkrementale Positionsmessung Licht verwendet, welches eine möglichst kleine Wellenlänge aufweist. Dies hat den Vorteil, dass die erste Talbot-Ebene (n=1) in einem Abstand erscheint, an dem auf einfache Weise das zweite Gitter angeordnet werden kann. Vorteilhaft ist es deshalb, wenn die Beleuchtung und die Ausbildung des ersten Gitters und des zweiten Gitters derart erfolgen, dass nach dem ersten Gitter der Talbot-Effekt entsteht, wobei das zweite Gitter in einem Abtastabstand vom ersten Gitter entsprechend dem ersten Talbot-Abstand, also in der ersten Talbot-Ebene mit n=1, angeordnet ist.

Für die absolute Positionsmessung wird dagegen Licht einer größeren Wellenlänge verwendet.

Ein einfacher Aufbau der Positionsmesseinrichtung ergibt sich, wenn für die inkrementale Positionsmessung und die absolute Positionsmessung gleichartige Detektorelemente Verwendung finden. Die erste Detektoranordnung und die zweite Detektoranordnung weisen dann gleiche spektrale Empfindlichkeiten auf.

Zur Erzeugung des Lichtes der ersten Wellenlänge ist vorzugsweise eine erste monochromatische Lichtquelle und zur Erzeugung des Lichtes der zweiten Wellenlänge eine zweite monochromatische Lichtquelle vorgesehen.

Zum Erreichen eines besonders kompakten und gut handhabbaren Aufbaus sind die erste Lichtquelle, die zweite Lichtquelle, die erste Detektoranordnung und die zweite Detektoranordnung gemeinsam auf einer Oberseite eines transparenten Trägersubstrats angeordnet, so dass die lichtemittierenden Seiten der Lichtquellen und die lichtempfindlichen Seiten der beiden Detektoranordnungen in Richtung der Maßverkörperung orientiert sind.

Beispielsweise ist die spektrale Empfindlichkeit der beiden Detektoranordnungen für die zweite Wellenlänge größer als für die erste Wellenlänge.

Ein besonders einfacher Aufbau wird erreicht, wenn die Detektoranordnungen unter Verwendung von amorphem Silicium ausgebildet sind. Das Maximum der spektralen Empfindlichkeit von amorphem Silicium liegt bei etwa 570 nm. Die erste Wellenlänge wird hier vorzugsweise kleiner 520 nm gewählt. Insbesondere liegt die erste Wellenlänge im Bereich von 430 nm bis 500 nm und die zweite Wellenlänge im Bereich von 570 nm ± 50 nm.

Die Detektoranordnungen können aber auch unter Verwendung von kristallinem Silicium ausgebildet sein. Die erste Wellenlänge, also das Licht zur Inkrementalmessung, wird hier vorzugsweise kleiner 700 nm, insbesondere etwa 600 nm, gewählt und die zweite Wellenlänge, also das Licht zur Absolutmessung, wird etwa 870 nm ± 50 nm gewählt.

Besonders vorteilhafte Ausgestaltungen der Erfindung sind in den abhängigen Ansprüchen angegeben. Weitere Vorteile sowie Einzelheiten der Erfindung ergeben sich aus der nachfolgenden Beschreibung von zwei Ausführungsbeispielen der Erfindung.

Dabei zeigen:

Figur 1    einen Längsschnitt durch eine erste Positionsmesseinrichtung;

Figur 2    einen Querschnitt durch eine zweite Positionsmesseinrichtung;

Figur 3    den Verlauf der Signalamplitude der Inkrementalabtastung in Abhängigkeit von der verwendeten Wellenlänge, und

Figur 4    den Verlauf der spektralen Empfindlichkeit E einer Detektoranordnung auf der Basis von amorphem Silizium aSi und auf der Basis von kristallinem Silicium Si in Abhängigkeit von der Wellenlänge $\lambda$.

Grundsätzlich ist die Erfindung für Durchlichtabtastung sowie Auflichtabtastung einsetzbar. Bei der Durchlichtabtastung erfolgt die Beleuchtung durch Lichtquellen, welche auf der einen Seite der Maßverkörperung angeordnet sind, wogegen die Detektoranordnungen auf der anderen Seite der Maßverkörperung angeordnet sind, weshalb die Maßverkörperung für die entsprechenden Wellenlängen transparent sein muss. Die Auflichtabtastung hingegen nutzt das Reflexionsverhalten der Maßverkörperung aus, indem die Detektoranordnungen auf der gleichen Seite wie die Lichtquellen angeordnet sind. Für einen kompakten Aufbau einer Positionsmesseinrichtung eignet sich insbesondere die Auflichtabtastung, weshalb die Erfindung nachfolgend anhand zweier Ausführungsbeispiele mit Auflichtabtastung näher erläutert wird.

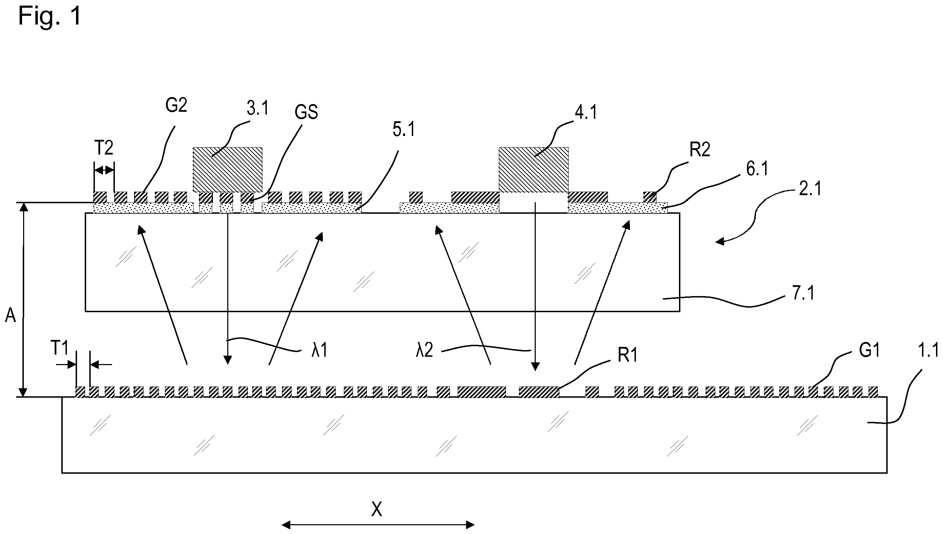

Die Figur 1 zeigt einen Längsschnitt eines ersten Ausführungsbeispiels einer erfindungsgemäß ausgebildeten optischen Positionsmesseinrichtung. Die Positionsmesseinrichtung weist eine Maßverkörperung 1.1 und eine relativ dazu in Messrichtung X verschiebbare Abtasteinheit 2.1 auf. Die Maßverkörperung 1.1 weist zur inkrementalen Positionsmessung ein erstes Gitter G1 in Form einer periodischen inkrementalen Teilung auf. Weiterhin umfasst die Maßverkörperung 1.1 eine Absolutmarkierung R1 zur absoluten Positionsmessung. Diese Absolutmarkierung R1 ist im dargestellten Beispiel eine Referenzmarke mit einer unregelmäßigen Strichanordnung, die eine einzige Position innerhalb des Messbereiches eindeutig definiert. Die Absolutmarkierung R1 ist im dargestellten Beispiel eine in das erste Gitter G1 integrierte Markierung. Dabei handelt es sich um eine aperiodische Störung der das erste Gitter G1 bildenden Abfolge von periodischen Teilungsstrichen.

Die Absolutmarkierung R1 kann aber auch in einer eigenen Spur räumlich neben dem ersten Gitter G1 angeordnet sein. Die Absolutmarkierung kann weiterhin ein in Messrichtung X angeordneter Code, insbesondere ein PRC sein, der an jeder Position innerhalb des Messbereichs eine eindeutige Absolutposition definiert.

Die im Beispiel dargestellte inkrementale Positionsmessung beruht auf dem sogenannten Dreigittergeber-Prinzip. Hierbei wird das erste Gitter G1 der Maßverkörperung 1.1 mit Hilfe eines weiteren Gitters GS, hier Sendegitter GS genannt, beleuchtet. Die Abtasteinheit 2.1 weist ein weiteres Gitter G2, hier zweites Gitter G2 genannt, auf, das zur Abtastung des im Abtastabstand A entstehenden Bildes des ersten Gitters G1 angeordnet ist.

Bei diesem Dreigittergeber-Prinzip dient das Sendegitter GS zur Aufspaltung des Lichtes der ersten Lichtquelle 3.1 und es ergeben sich theoretisch folgende Talbot-Abstände:

$$L_n = n \times T1 \times T2 / \lambda1$$

n: ganze Zahl 0, 1, 2,...
T1: Gitterkonstante des ersten Gitters G1
T2: Gitterkonstante des zweiten Gitters G2
$\lambda1$: Wellenlänge des Lichtes für die Inkrementalabtastung
Mit T2 = 2×T1 ergibt sich

$$L_n = n \times 2 \times T1^2 / \lambda1$$

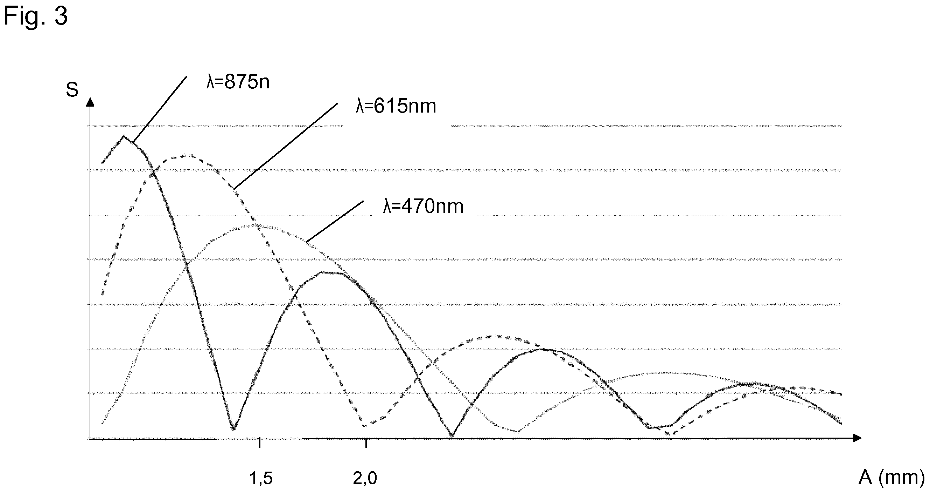

Die Figur 3 zeigt den Verlauf der Signalamplitude S der Inkrementalabtastung in Abhängigkeit von der verwendeten Wellenlänge $\lambda$. Die Verläufe zeigen den tatsächlichen Verlauf der Signalamplituden bei dem in Figur 1 dargestellten Aufbau. Wird für die Inkrementalabtastung Licht der Wellenlänge $\lambda 1$=470 nm verwendet, liegt die erste Talbot-Ebene (n=1) in einem Abtastabstand A von etwa 1,5 mm bei einer Gitterkonstanten T1=20 $\mu$m. Wählt man den Abtastabstand A entsprechend dem Ort der ersten Talbot-Ebene (n=1), ergibt sich einerseits eine relativ hohe Signalamplitude S und andererseits ist die Amplitudenänderung bei einer Änderung des Abtaststandes A relativ gering. Die Montagetoleranzen während des Zusammenbaus der Positionsmesseinrichtung und die zulässigen Toleranzen während des Betriebs, z.B. aufgrund von Temperaturänderungen, sind daher relativ groß.

Bei der Erfindung wird die Abhängigkeit der Talbot-Abstände von der Wellenlänge $\lambda 1$ des verwendeten Lichtes optimal ausgenutzt. Zur hochgenauen Positionsmessung werden für die Maßverkörperung 1.1 Gitter G1 gefordert, welche eine möglichst kleine Gitterkonstante T1 aufweisen. Mit Verringerung der Gitterkonstante T1 verringern sich auch die Talbot-Abstände. Mit Verringerung der Talbot-Abstände verringern sich auch die zulässigen Toleranzen für den Abtastabstand A. Um nun einen mechanisch einfach realisierbaren Abtastabstand A zu ermöglichen, wird gemäß der Erfindung für die inkrementale Positionsmessung Licht möglichst kleiner Wellenlänge $\lambda 1$ verwendet.

Aus der Figur 3 ist ersichtlich, dass sich die Abstände der Talbot-Ebenen mit Verringerung der Wellenlänge $\lambda$ des verwendeten Lichtes erhöhen. Die Empfindlichkeit bezüglich Abstandsänderungen ist bei kleinen Wellenlängen $\lambda$ geringer wie bei höheren Wellenlängen $\lambda$. Bei der Erfindung wird nun sogar in Kauf genommen, dass für die Inkrementalabtastung die verwendete Wellenlänge $\lambda 1$ außerhalb der maximalen spektralen Empfindlichkeit der ihr zugeordneten Detektoranordnung 5.1, nachfolgend erste Detektoranordnung 5.1 genannt, liegt.

Für die absolute Positionsmessung wird eine Wellenlänge $\lambda 2$ verwendet, die größer ist als die Wellenlänge $\lambda 1$ für die Inkrementalabtastung. Sind nun die erste Detektoranordnung 5.1 und die zweite Detektoranordnung 6.1 gleich aufgebaut, so weisen diese einen gleichen spektralen Empfindlichkeitsverlauf in Abhängigkeit der Wellenlänge $\lambda$ auf.

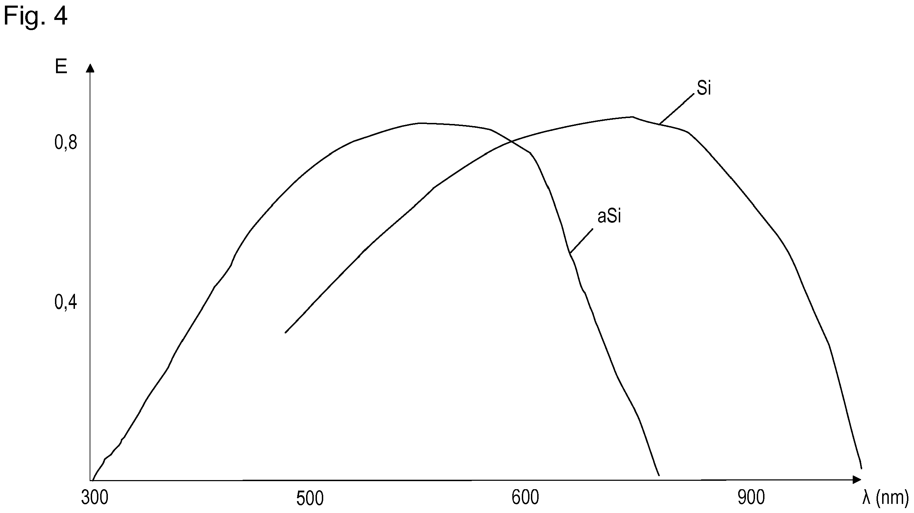

Die beiden Detektoranordnungen 5.1, 6.1 sind beispielsweise unter Verwendung von amorphem Silizium ausgebildet. Der Verlauf der spektralen Empfindlichkeit E der Detektoranordnungen 5.1, 6.1 auf Basis von amorphem Silizium (aSi) in Abhängigkeit von der Wellenlänge $\lambda$ des verwendeten Lichtes ist in Figur 4 dargestellt. Das Maximum der spektralen Empfindlichkeit liegt bei etwa 570 nm. Für die Absolutabtastung ist dabei Licht einer Wellenlänge $\lambda 2$ im Bereich von 570 nm $\pm$ 50 nm vorteilhaft. Für die Inkrementalabtastung ist dann Licht einer Wellenlänge $\lambda 1$ unter 520 nm, insbesondere im Bereich von 430 nm bis 500 nm vorteilhaft, um den gewünschten Abtastabstand A von über 1 mm zu erreichen. Dabei wird in Kauf genommen, dass für die Inkrementalmessung die verwendete Wellenlänge $\lambda 1$ außerhalb der maximalen spektralen Empfindlichkeit der Detektoranordnung 5.1 liegt.

Die Abstimmung der verwendeten Wellenlängen $\lambda 1$, $\lambda 2$ für die beiden Abtastungen auf den spektralen Empfindlichkeitsverlauf E der Detektoranordnungen 5.1 und 6.1 erfolgt im dargestellten Beispiel derart, dass die spektrale Empfindlichkeit für die zweite Wellenlänge $\lambda 2$ größer ist als die spektrale Empfindlichkeit für die erste Wellenlänge $\lambda 1$. Für die Absolutabtastung wird also die spektrale Charakteristik der Detektoranordnung 6.1 voll ausgenutzt, indem die zweite Wellenlänge $\lambda 2$ im Maximum bzw. zumindest nahe am Maximum des spektralen Empfindlichkeitsverlaufs E liegt.

Allgemein ausgedrückt wird die Wellenlänge $\lambda 2$ zur Absolutabtastung vorzugsweise gleich dem spektralen Empfindlichkeitsmaximum der dieser Abtastung zugeordneten Detektoranordnung 6.1 gewählt, vorzugsweise mit einer Toleranz von $\pm$ 50 nm. Die Wellenlänge $\lambda 1$ zur Inkrementalabtastung wird im Vergleich dazu kleiner gewählt.

Die erste Detektoranordnung 5.1 für die Inkrementalabtastung ist vorzugsweise in Form einer sogenannten strukturierten Detektoranordnung ausgebildet, indem das zweite Gitter G2 in den Schichtaufbau der photoempfindlichen Detektoren integriert ist. In bekannter Weise können mehrere Gruppen von Detektoranordnungen 5.1 vorgesehen werden, die derart angeordnet und zusammengeschaltet sind, dass mehrere gegeneinander phasenverschobene Abtastsignale ableitbar sind. Zur Ausbildung der Inkrementalabtastung wird beispielsweise auf die EP 1 695 391 B1 verwiesen.

Im dargestellten Beispiel ist auch die zweite Detektoranordnung 6.1 für die Absolutabtastung in Form einer strukturierten Detektoranordnung ausgebildet, indem die Struktur R2 zur Abtastung der Absolutmarkierung R1 in den Schichtaufbau der photoempfindlichen Detektoren integriert ist.

Die Detektoranordnungen 5.1, 6.1 sind vorzugsweise gemeinsam auf einer Oberseite eines transparenten Trägersubstrats 7.1 angeordnet, die der Maßverkörperung 1.1 abgewandt ist. Die erste Lichtquelle 3.1, die zweite Lichtquelle 4.1, die erste Detektoranordnung 5.1 und die zweite Detektoranordnung 6.1 sind derart auf der Oberseite des transparenten Trägersubstrats 7.1 angeordnet, dass die lichtemittierenden Seiten der Lichtquellen 3.1 und 4.1 und die lichtempfindlichen Seiten der Detektoranordnungen 5.1 und 6.1 in Richtung der Maßverkörperung 1.1 orientiert sind.

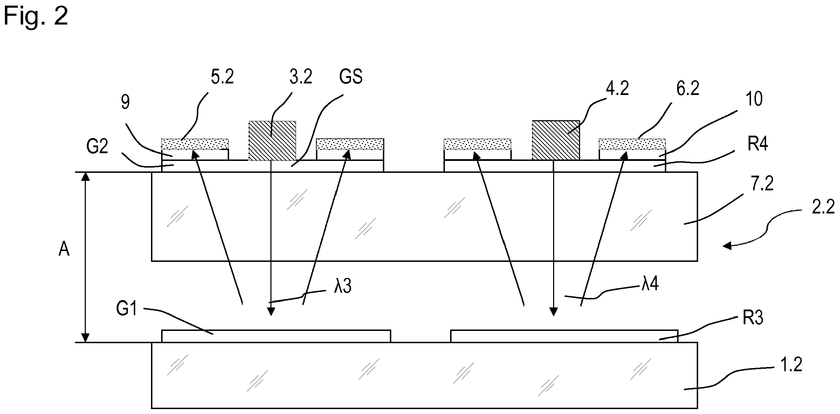

Figur 2 zeigt ein zweites Ausführungsbeispiel der Erfindung. Bei diesem Ausführungsbeispiel ist die Absolutmarkierung R3 räumlich neben dem ersten Gitter G1 auf der Maßverkörperung 1.2 angeordnet. Die Detektoranordnung 5.2 für die Inkrementalmessung und die Detektoranordnung 6.2 für die Absolutmessung sind wiederum gemeinsam auf einer Oberseite des transparenten Trägersubstrats 7.2 angeordnet, die der Maßverkörperung 1.2 abgewandt ist. Die erste Lichtquelle 3.2, die zweite Lichtquelle 4.2, die erste Detektoranordnung 5.2 und die zweite Detektoranordnung 6.2 sind derart auf der Oberseite des transparenten Trägersubstrats 7.2 angeordnet, dass die lichtemittierenden Seiten der Lichtquellen 3.2 und 4.2 und die lichtempfindlichen Seiten der Detektoranordnungen 5.2 und 6.2 in Richtung der Maßverkörperung 1.2 orientiert sind.

Bei diesem Beispiel sind die Detektoranordnungen 5.2 und 6.2 der Abtasteinheit 2.2 auf der Basis von kristallinem Silicium (Si) aufgebaut. Der Verlauf der spektralen Empfindlichkeit E dieser Detektoranordnungen 5.2 und 6.2 ist in Figur 4 dargestellt. Das Maximum der spektralen Empfindlichkeit liegt bei einer Wellenlänge $\lambda$ von etwa 870 nm. Das Licht zur Absolutmessung, also die zweite Wellenlänge $\lambda 4$ der zweiten Lichtquelle 4.2 wird daher etwa 870 nm ± 50 nm gewählt. Die erste Wellenlänge $\lambda 3$, also das Licht der Lichtquelle 3.2 zur Inkrementalmessung, wird hier vorzugsweise kleiner 700 nm gewählt, insbesondere etwa 600 nm.

Die Verwendung unterschiedlicher Wellenlängen $\lambda 1$, $\lambda 2$ bzw. $\lambda 3$, $\lambda 4$ bietet zusätzlich die Möglichkeit Filter einzusetzen, um eine gegenseitige Beeinflussung der beiden Abtastkanäle (Inkrementalabtastung und Absolutabtastung) zu vermeiden. Eine mögliche Anordnung derartiger Filter 9 und 10 ist in Figur 2 dargestellt. Hierzu ist der ersten Detektoranordnung 5.2 ein erster Filter 9 zugeordnet, welcher für Lichtanteile der ersten Wellenlänge $\lambda 3$ transparent ist und für Lichtanteile der zweiten Wellenlänge $\lambda 4$ opak ist. Der Filter 9 ist zwischen dem zweiten Gitter G2 und den lichtempfindlichen Flächen der ersten Detektoranordnung 5.2 angeordnet. Der zweiten Detektoranordnung 6.2 ist ein Filter 10 zugeordnet, welcher für Lichtanteile der zweiten Wellenlänge $\lambda 4$ transparent ist und für Lichtanteile der ersten Wellenlänge $\lambda 3$ opak ist. Der Filter 10 ist zwischen der Struktur R4 zur Abtastung der Absolutmarkierung R3 und der zweiten Detektoranordnung 6.2 angeordnet.

## Patentansprüche

1. Optische Positionsmesseinrichtung mit einer Maßverkörperung (1.1, 1.2) und einer relativ dazu in einer Messrichtung (X) verschiebbaren Abtasteinheit (2.1, 2.2), wobei

    - die Maßverkörperung (1.1, 1.2) ein erstes Gitter (G1) in Form einer periodischen inkrementalen Teilung aufweist und die Abtasteinheit (2.1, 2.2) zumindest ein zweites Gitter (G2) aufweist, welches zum ersten Gitter (G1) in einem Abtastabstand (A) angeordnet ist, wobei zur Positionsbestimmung die beiden Gitter (G1, G2) mit Licht einer ersten Wellenlänge ($\lambda 1$, $\lambda 3$) beaufschlagt werden und mittels einer ersten Detektoranordnung (5.1, 5.2) daraus ein erstes Abtastsignal gewonnen wird;
    - die Maßverkörperung (1.1, 1.2) weiterhin eine Absolutmarkierung (R1, R3) aufweist, wobei zur Positionsbestimmung die Absolutmarkierung (R1, R3) mit Licht einer zweiten Wellenlänge ($\lambda 2$, $\lambda 4$) beaufschlagt wird und mittels einer zweiten Detektoranordnung (6.1, 6.2) daraus ein zweites Abtastsignal gewonnen wird;
    - die erste Wellenlänge ($\lambda 1$, $\lambda 3$) kleiner als die zweite Wellenlänge ($\lambda 2$, $\lambda 4$) ist.

2. Optische Positionsmesseinrichtung nach Anspruch 1, wobei die erste Detektoranordnung (5.1, 5.2) und die zweite Detektoranordnung (6.1, 6.2) den gleichen spektralen Empfindlichkeitsverlauf (E) in Abhängigkeit von der Wellenlänge ($\lambda$) aufweisen, und die erste Wellenlänge ($\lambda 1$, $\lambda 3$) und die zweite Wellenlänge ($\lambda 2$, $\lambda 4$) derart gewählt sind, dass die spektrale Empfindlichkeit für die zweite Wellenlänge ($\lambda 2$, $\lambda 4$) größer ist als die spektrale Empfindlichkeit für die erste Wellenlänge ($\lambda 1$, $\lambda 3$).

3. Optische Positionsmesseinrichtung nach Anspruch 1 oder 2, wobei die zweite Wellenlänge ($\lambda 2$, $\lambda 4$) innerhalb des Bereiches:
Maximum der spektralen Empfindlichkeit der zweiten Detektoranordnung (6.1, 6.2) ± 50 nm
liegt.

4. Optische Positionsmesseinrichtung nach einem der vorhergehenden Ansprüche, wobei die erste Wellenlänge ($\lambda 1$) kleiner 520nm ist.

5. Optische Positionsmesseinrichtung nach einem der vorhergehenden Ansprüche, wobei die erste Detektoranordnung (5.1) und die zweite Detektoranordnung (6.1) unter Verwendung von amorphem Silicium ausgebildet sind.

6. Optische Positionsmesseinrichtung nach Anspruch 5, wobei die erste Wellenlänge ($\lambda 1$) im Bereich von 430 nm bis 500 nm liegt und die zweite Wellenlänge ($\lambda 2$) im Bereich von 570 nm ± 50 nm liegt.

7. Optische Positionsmesseinrichtung nach einem der Ansprüche 1 bis 3, wobei die erste Detektoranordnung (5.2) und die zweite Detektoranordnung (6.2) unter Verwendung von kristallinem Silicium ausgebildet sind, und die erste Wellenlänge ($\lambda 3$) kleiner 700 nm ist und die zweite Wellenlänge ($\lambda 4$) im Bereich von 870 nm ± 50 nm liegt.

8. Optische Positionsmesseinrichtung nach einem der vorhergehenden Ansprüche, wobei die Beleuchtung und die Ausbildung des ersten Gitters (G1) und des zweiten Gitters (G2) derart erfolgen, dass nach dem ersten Gitter (G1) der Talbot-Effekt entsteht, wobei das zweite Gitter (G2) in einem Abtastabstand (A) vom ersten Gitter (G1) entsprechend dem ersten Talbot-Abstand angeordnet ist.

9. Optische Positionsmesseinrichtung nach einem der vorhergehenden Ansprüche, wobei zur Erzeugung des Lichtes der ersten Wellenlänge ($\lambda$1, $\lambda$3 ) eine erste Lichtquelle (3.1, 3.2) und zur Erzeugung des Lichtes der zweiten Wellenlänge ($\lambda$2, $\lambda$4) eine zweite Lichtquelle (4.1, 4.2) vorgesehen sind, und wobei die erste Lichtquelle (3.1, 3.2), die zweite Lichtquelle (4.1, 4.2), die erste Detektoranordnung (5.1, 5.2) und die zweite Detektoranordnung (6.1, 6.2) gemeinsam auf einem transparenten Trägersubstrat (7.1, 7.2) angeordnet sind.

10. Optische Positionsmesseinrichtung nach Anspruch 9, wobei die erste Lichtquelle (3.1, 3.2), die zweite Lichtquelle (4.1, 4.2), die erste Detektoranordnung (5.1, 5.2) und die zweite Detektoranordnung (6.1, 6.2) derart auf einer Oberseite des transparenten Trägersubstrats (7.1, 7.2) angeordnet sind, dass die lichtemittierenden Seiten der Lichtquellen (3.1, 3.2, 4.1, 4.2) und die lichtempfindlichen Seiten der Detektoranordnungen (5.1, 5.2, 6.1, 6.2) in Richtung der Maßverkörperung (1.1, 1.2) orientiert sind.

11. Optische Positionsmesseinrichtung nach einem der vorhergehenden Ansprüche, wobei der ersten Detektoranordnung (5.2) ein Filter (9) zugeordnet ist, welcher für Lichtanteile der zweiten Wellenlänge ($\lambda$4) opak ist, und wobei der zweiten Detektoranordnung (6.2) ein Filter (10) zugeordnet ist, welcher für Lichtanteile der ersten Wellenlänge ($\lambda$3) opak ist.

**Claims**

1. Optical position measuring device having a measuring standard (1.1, 1.2) and a scanning unit (2.1, 2.2), which is displaceable in a measuring direction (X) relative thereto, wherein

   - the measuring standard (1.1, 1.2) has a first grating (G1) in the form of a periodic incremental graduation, and the scanning unit (2.1, 2.2) has at least one second grating (G2) which is arranged at a scanning distance (A) from the first grating (G1), wherein light of a first wavelength ($\lambda$1, $\lambda$3) is applied to the two gratings (G1, G2) for the position determination and a first scanning signal is obtained therefrom using a first detector arrangement (5.1, 5.2);
   - the measuring standard (1.1, 1.2) furthermore has an absolute mark (R1, R3), wherein light of a second wavelength ($\lambda$2, $\lambda$4) is applied to the absolute mark (R1, R3) for the position determination and a second scanning signal is obtained therefrom using a second detector arrangement (6.1, 6.2);
   - the first wavelength ($\lambda$1, $\lambda$3) is smaller than the second wavelength ($\lambda$2, $\lambda$4).

2. Optical position measuring device according to Claim 1, wherein the first detector arrangement (5.1, 5.2) and the second detector arrangement (6.1, 6.2) have the same spectral sensitivity profile (E) in dependence on the wavelength ($\lambda$), and the first wavelength ($\lambda$1, $\lambda$3) and the second wavelength ($\lambda$2, $\lambda$4) are selected such that the spectral sensitivity for the second wavelength ($\lambda$2, $\lambda$4) is greater than the spectral sensitivity for the first wavelength ($\lambda$1, $\lambda$3).

3. Optical position measuring device according to Claim 1 or 2, wherein the second wavelength ($\lambda$2, $\lambda$4) is within the range:
maximum of the spectral sensitivity of the second detector arrangement (6.1, 6.2) $\pm$ 50 nm.

4. Optical position measuring device according to one of the preceding claims, wherein the first wavelength ($\lambda$1) is smaller than 520 nm.

5. Optical position measuring device according to one of the preceding claims, wherein the first detector arrangement (5.1) and the second detector arrangement (6.1) are formed using amorphous silicon.

6. Optical position measuring device according to Claim 5, wherein the first wavelength ($\lambda$1) ranges from 430 nm to 500 nm, and the second wavelength ($\lambda$2) is in the region of 570 nm $\pm$ 50 nm.

7. Optical position measuring device according to one of Claims 1 to 3, wherein the first detector arrangement (5.2) and the second detector arrangement (6.2) are formed using crystalline silicon, and the first wavelength ($\lambda$3) is smaller than 700 nm and the second wavelength ($\lambda$4) is in the region of 870 nm $\pm$ 50 nm.

8. Optical position measuring device according to one of the preceding claims, wherein the illumination and the formation of the first grating (G1) and of the second grating (G2) are performed such that the Talbot effect occurs after the first grating (G1), wherein the second grating (G2) is arranged at a scanning distance (A) from the first grating (G1) corresponding to the first Talbot length.

9. Optical position measuring device according to one of the preceding claims, wherein a first light source (3.1, 3.2) is provided for producing the light of the first wavelength ($\lambda$1, $\lambda$3) and a second light source (4.1, 4.2) is provided for producing the light of the second wavelength ($\lambda$2, $\lambda$4), and wherein the first light source (3.1, 3.2), the second light source (4.1, 4.2), the first detector arrangement (5.1, 5.2) and the second detector arrangement (6.1, 6.2) are arranged together on a transparent carrier substrate (7.1, 7.2).

**10.** Optical position measuring device according to Claim 9, wherein the first light source (3.1, 3.2), the second light source (4.1, 4.2), the first detector arrangement (5.1, 5.2) and the second detector arrangement (6.1, 6.2) are arranged on an upper side of the transparent carrier substrate (7.1, 7.2) such that the light-emitting sides of the light sources (3.1, 3.2, 4.1, 4.2) and the light-sensitive sides of the detector arrangements (5.1, 5.2, 6.1, 6.2) are oriented in the direction of the measuring standard (1.1, 1.2).

**11.** Optical position measuring device according to one of the preceding claims, wherein the first detector arrangement (5.2) is assigned a filter (9) which is opaque for light components of the second wavelength ($\lambda 4$), and wherein the second detector arrangement (6.2) is assigned a filter (10) which is opaque for light components of the first wavelength ($\lambda 3$).

**Revendications**

**1.** Dispositif optique de mesure de position comportant un étalon de mesure (1.1, 1.2) et une unité de balayage (2.1, 2.2) pouvant être déplacée par rapport à celui-ci dans une direction de mesure (X), dans lequel

- l'étalon de mesure (1.1, 1.2) comporte un premier réseau (G1) sous la forme d'une division incrémentielle périodique et l'unité de balayage (2.1, 2.2) comporte au moins un second réseau (G2) qui est disposé à une distance de balayage (A) par rapport au premier réseau (G1), dans lequel les deux réseaux (G1, G2) sont exposés à une lumière ayant une première longueur d'onde ($\lambda 1$, $\lambda 3$) pour la détermination de position et un premier signal de balayage est obtenu à partir de celle-ci au moyen d'un premier système détecteur (5.1, 5.2) ;
- l'étalon de mesure (1.1, 1.2) comporte en outre un marquage absolu (R1, R3), dans lequel le marquage absolu (R1, R3) est exposé à une lumière ayant une seconde longueur d'onde ($\lambda 2$, $\lambda 4$) pour la détermination de position et un second signal de balayage est obtenu au moyen d'un second système détecteur (6.1, 6.2) ;
- la première longueur d'onde ($\lambda 1$, $\lambda 3$) est inférieure à la seconde longueur d'onde ($\lambda 2$, $\lambda 4$).

**2.** Dispositif optique de mesure de position, dans lequel le premier système détecteur (5.1, 5.2) et le second système détecteur (6.1, 6.2) présentent la même courbe de sensibilité spectrale (E) en fonction de la longueur d'onde ($\lambda$), et la première longueur d'onde ($\lambda 1$, $\lambda 3$) et la seconde ($\lambda 2$, $\lambda 4$) sont sélectionnées de telle manière que la sensibilité spectrale à la seconde longueur d'onde ($\lambda 2$, $\lambda 4$) soit supérieure à la sensibilité spectrale à la première longueur d'onde ($\lambda 1$, $\lambda 3$).

**3.** Dispositif optique de mesure de position selon la revendication 1 ou 2, dans lequel la seconde longueur d'onde ($\lambda 2$, $\lambda 4$) se situe dans la plage du maximum de la sensibilité spectrale du second système détecteur (6.1, 6.2) $\pm 50$ nm.

**4.** Dispositif optique de mesure de position selon l'une quelconque des revendications précédentes, dans lequel la première longueur d'onde ($\lambda 1$) est inférieure à 520 nm.

**5.** Dispositif optique de mesure de position selon l'une quelconque des revendications précédentes, dans lequel le premier système détecteur (5.1) et le second système détecteur (6.1) sont réalisés par utilisation de silicium amorphe.

**6.** Dispositif optique de mesure de position selon la revendication 5, dans lequel la première longueur d'onde ($\lambda 1$) se situe dans la plage de 430 nm à 500 nm et la seconde longueur d'onde ($\lambda 2$) se situe dans la plage de 570 nm $\pm 50$ nm.

**7.** Dispositif optique de mesure de position selon l'une quelconque des revendications 1 à 3, dans lequel le premier système détecteur (5.2) et le second système détecteur (6.2) sont réalisés par utilisation de silicium cristallin, et la première longueur d'onde ($\lambda 3$) est inférieure à 700 nm et la seconde longueur d'onde ($\lambda 4$) se situe dans la plage de 870 nm $\pm 50$ nm.

**8.** Dispositif optique de mesure de position selon l'une quelconque des revendications précédentes, dans lequel l'éclairement et la réalisation du premier réseau (G1) et du second réseau (G2) sont effectués de telle manière qu'il se produise un effet Talbot en aval du premier réseau (G1), dans lequel le second réseau (G2) est disposé à une distance de balayage (A) du premier réseau (G1) qui correspond à la première distance de Talbot.

**9.** Dispositif optique de mesure de position selon l'une quelconque des revendications précédentes, dans lequel, pour générer une lumière ayant la première longueur d'onde ($\lambda 1$, $\lambda 3$), il est prévu une première source lumineuse (3.1, 3.2) et pour générer une lumière ayant la seconde longueur d'onde ($\lambda 2$, $\lambda 4$) il est prévu une seconde source lumineuse (4.1, 4.2), et dans lequel la première source lumineuse (3.1, 3.2), la seconde source lumineuse (4.1, 4.2), le premier système détecteur (5.1, 5.2) et le second système détecteur (6.1, 6.2) sont disposés ensemble sur un substrat de support transparent (7.1, 7.2).

**10.** Dispositif optique de mesure de position selon la revendication 9, dans lequel la première source lumineuse (3.1, 3.2), la seconde source lumineuse (4.1, 4.2), le premier système détecteur (5.1, 5.2) et le second système détecteur (6.1, 6.2) sont disposés sur une face supérieure du substrat de support transparent (7.1, 7.2), et en ce que les faces émettrices de lumière des sources lumineuses (3.1, 3.2, 4.1, 4.2) et les faces sensibles à la lumière des systèmes détecteurs (5.1, 5.2, 6.1, 6.2) sont orientées dans la direction de l'étalon de mesure (1.1, 1.2).

**11.** Dispositif optique de mesure de position selon l'une quelconque des revendications précédentes, dans lequel un filtre (9) qui est opaque aux composantes de lumière à la seconde longueur d'onde ($\lambda 4$) est associé au premier système détecteur (5.2), et dans lequel un filtre (10) qui est opaque aux composantes de lumière à la première longueur d'onde ($\lambda 3$) est associé au second système détecteur (6.2).

Fig. 1

Fig. 2

Fig. 3

Fig. 4

EP 2 735 848 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3334398 C1
- EP 2395328 A2
- EP 1695391 B1